# EUROPÄISCHE PATENTANMELDUNG

(11) **EP 1 030 213 A1**
(43) Veröffentlichungstag der Anmeldung: **23.08.2000**
(21) Anmeldenummer: 99103339.0
(22) Anmeldetag: 20.02.1999
(51) Int. Cl.: G03B 21/40, G03B 9/10

(54) **Kinofilmprojektor**

(71) Anmelder: Raytheon Marine GmbH, 24106 Kiel (DE)
(72) Erfinder: Baumann, Hans Dr. Dipl.- Phys., 24223 Raisdorf (DE)
(74) Vertreter: Baumann, Eduard, Dipl.-Phys.

(57) **Zusammenfassung**

Die Erfindung bezieht sich auf einen Kinofilmprojektor, bei dem eine Lichtquelle über eine Umlaufblende und ein Bildfenster ein Bild eines schrittweise vorbeibewegten Filmes über ein Projektionsobjektiv an eine Kinoleinwand projiziert. Zur Erzielung einer höheren Bildfrequenz wird eine rotationssymmetrische Umlaufblende aus lichttransparentem Material eingesetzt, in der nur ein einziges lichttransparentes Transmissionsfenster vorgesehen ist. Hierbei wird die Drehgeschwindigkeit der Umlaufblende entsprechend erhöht.

## Beschreibung

Die Erfindung bezieht sich auf einen Kinofilmprojektor nach dem Oberbegriff des Anspruches 1. Hier wird ein Film Schritt für Schritt an einem Bildfenster vorbeibewegt, nur bei stehendem Bild wird dieses an eine Leinwand projiziert. Zu diesem Zweck ist eine Umlaufblende vorgesehen. Weiterhin ist in aller Regel ein Infrarotfilter zur Begrenzung der Wärmeentwicklung auf dem Film vorgesehen.

Die Umlaufblende ist mit der Film-Transportgeschwindigkeit synchronisiert, so daß nur bei stehendem Bild Licht zur Bildprojektion freigegeben wird. Die Filmtransportgeschwindigkeit ist üblicherweise auf vierundzwanzig Bilder pro Sekunde festgesetzt. Dadurch ist noch ein bestimmtes Flimmern vorhanden. Dies läßt sich dadurch reduzieren, daß auch bei stehendem Bild eine kurzzeitige Lichtstrahlunterbrechung durch eine entsprechend ausgebildete Umlaufblende erfolgt. Dies ließe sich durch eine mechanische übliche Umlaufblende erreichen, die beispielsweise statt nur einer Lichtunterbrechung zwei oder drei Lichtdurchbrechungen aufweist, man spricht hierbei von Einflügelblende, Zweiflügelblende, Dreiflügelblende. Eine mit dreifacher Geschwindigkeit umlaufende Einflügelblende aus Metall beinhaltet jedoch eine hohes Trägheitsmoment und birgt die Gefahr einer Unsymmetrie, die bei der erforderlichen hohen Umdrehungsgeschwindigkeit zu Unwuchtproblemen führt.

Entscheidend für den Lichtwirkungsgrad ist die Größe des Dunkelsektors. Dieser Dunkelsektor hängt vom Schaltverhältnis des Schaltwerks ab und entspricht der Zeit des Filmtransporters T_{B}. Hinzu kommt die Zeitspanne, die benötigt wird, um den Lichtstrahl abzudecken vor Beginn T_{LA} und nach Abschluß T_{LE} der Schaltbewegung.

Gesamtzeitspanne des Dunkelsektors T^{G:}
(1) T_{G} = T_{LA} + T_{B} + _{TLE} Einflügelblende
(2) T_{G} = 2 (T_{LA} + T_{B} + T_{LE}) Zweiflügelblende
(3) T_{G} = 3 (T_{LA} + T_{B} + T_{LE}) Dreiflügelblende

Ein Dreiflügelverschluß eliminiert zwar die Flimmerscheinungen, vermindert aber den Lichtwirkungsgrad E erheblich.
(4) Lichtwirkungsgrad E = Dunkelphase/Hellphase

Zu der ohnehin sich mit der Anzahl der Flügel multiplizierenden Zeit T_{B} kommen die Abdeckzeiten T_{A} und T_{E} hinzu.

Dieser zusätzliche Effekt kann bei einer Dreiflügelblende dadurch reduziert werden, daß man eine Blende mit einem einzigen Flügel benutzt, die Blende aber mit dreifacher Geschwindigkeit umlaufen läßt. Auf diese Weise wird der Lichtstrahl pro Bild dreimal unterbrochen, entsprechend einer Verschlußfrequenz von 72 Hz.

Während die Zeit T_{B} gleichbleibt (die Zeit des Schaltwerkes ändert sich ja nicht), werden die Abdeckzeiten T_{A} und T_{E} reduziert, da der Winkel, der notwendig ist, den Lichtstrahl abzudecken bzw. freizugeben, konstant bleibt, die Winkelgeschwindigkeit der Blende aber zunimmt.

Aus Gründen der Hitzebeständigkeit werden Umlaufverschlüsse üblicherweise aus Metall gefertigt. Als Umdrehungsgeschwindigkeit für eine Einflügelblende ergibt sich:
(5) v = 3 x 24 x 60 = 4320 U/min.

Diese hohe Drehgeschwindigkeit führt bei einer unsymmetrischen Einflügelblende zu erheblichen Unwuchtproblemen.

Der Erfindung liegt die Aufgabe zugrunde, einen Kinofilmprojektor gemäß dem Oberbegriff des Anspruches 1 so auszugestalten, daß bei erhöhter Bildunterbrechungsfrequenz Unwuchtprobleme vermieden werden können.

Die Aufgabe wird erfindungsgemäß durch die Merkmale des Anspruches 1 gelöst. Weitere Ausgestaltungen der Erfindung sind in den Unteransprüchen unter Schutz gestellt.

Beim Erfindungsgegenstand wird eine rotationssymmetrische Umlaufblende aus wärmebeständigem lichttransparentem Material, vorzugsweise Glas, eingesetzt. Die Umlaufblende weist ein einziges lichttransparentes Transmissionsfenster im optischen Strahlengang auf, die Drehgeschwindigkeit wird entsprechend erhöht, gegenüber einer dreiflügeligen üblichen mechanischen Blende verdreifacht. Dadurch ergibt sich statt einer Bildfrequenz von üblicherweise vierundzwanzig Bildern pro Sekunde eine solche von zweiundsiebzig Bildern pro Sekunde.

Erwähnt sei, daß auch eine Verdoppelung der Bildfrequenz durch das Vorsehen zweier um 180° versetzter, somit gegenüberliegender Transmissionsfenster bereits eine deutliche Verbesserung bringen würde, wobei eine Bildfrequenz von achtundvierzig Bildern pro Sekunde zu erzielen wäre.

Das eingesetzte lichttransparente Material bietet die Möglichkeit einer Beschichtung, beispielsweise mit infrarothemmendem Material, wobei eine Beschichtung lediglich im Transmissionsfenster erforderlich ist, und die übrige Scheibe beispielsweise durch eine entsprechende Lackierung oder Abdeckung lediglich licht- und wärmeundurchlässig gemacht werden kann. Die Lichtschwächung durch die sonst übliche zusätzliche Infrarot-Scheibe aus Glas von etwa zehn Prozent wird hierdurch gerade ausgeglichen.

Die mit der Antriebswelle des Motors verbundene, rotierende Umlaufblende kann in einem schmalen ortsfesten Gehäuse untergebracht werden, so daß jeweils einige mm Abstände zu den Wänden verbleiben. Das Gehäuse kann aus zwei metallischen Halbplatten bestehen, die sich gegenüberliegen und an den beiden Ringkanten eines schmalen Metallringes befestigt, vorzugsweise verklebt sind. Eine der metallischen Halbplatten kann über einen Motorflansch mit dem Motor verbunden sein, beispielsweise verklebt sein. Die beiden Halbplatten weisen gegenüberliegende Durchlaßöffnungen entsprechend der Position des Transmissionsfensters der Umlaufblende auf. In zentrischen Aussparungen jeder der beiden metallischen Halbplatten kann ein Motoradapter vorgesehen werden, dessen eines Ende mit der Umlaufblende verbunden ist, und dessen anderes Ende mit der Antriebswelle des Motors verbunden ist.

Die zwischen den beiden ortsfesten metallischen Halbplatten rotierende Umlaufblende aus Glas überstreicht mit ihrem Transmissionsfenster periodisch pro Umlauf die beiden gegenüberliegenden Licht-Durchlaßfenster der Halbplatten. Durch die schmalen Wandabstände wird die Luft in die beiden Spalte gezogen und bewirkt eine Abkühlung der Umlaufblende um bis zu 100° C. Dies ermöglicht die Verwendung weniger temperaturbeständiger Materialien. Dadurch wird auch der davor angeordnete Film geschont.

Ein Ausführungsbeispiel der Erfindung ist in der Zeichnung dargestellt. Es zeigt:
Figur 1 in schematischer Form eine Gesamtdarstellung eines Kinofilmprojektors von der Seite,
Figur 2 Motor und Gehäuse in perspektivischer Darstellung.
Figur 3 die Umlaufblende mit Motoradapter..

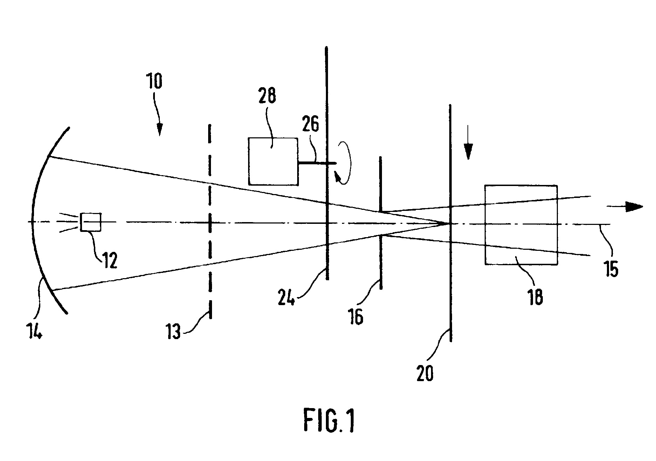

Gemäß Figur 1 projiziert eine Lichtquelle 12 über einen Hohlspiegel 14 entlang der Lichtachse oder optischen Achse 15 Licht durch das Transmissionsfenster der um eine Antriebswelle 26 rotierenden Umlaufblende 24, durch das Bildfenster 16 entsprechend dem Filmformat, durch den in Querrichtung bewegten Film 20 und über das Projektionsobjektiv 18 zu einer nicht gezeigten Kinoleinwand. Die Antriebswelle 26 für die Umlaufblende 24 wird durch einen Motor 28 angetrieben, der üblicherweise ein Getriebe aufweisen kann. Gestrichelt ist ein Infrarotfilter 13 dargestellt, das ja beim Erfindungsgegenstand selbst als eigenes Bauteil entfällt.

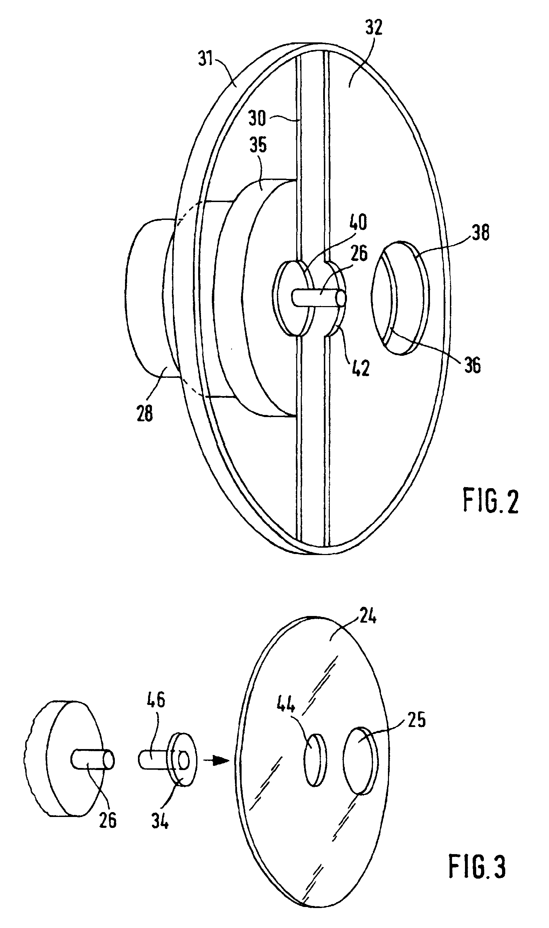

Figur 2 zeigt den Motor 28 mit Antriebswelle 26 für die (nicht gezeigte) Umlaufblende und mit einem zur Seite der Umlaufblende hin flanschartig ausgebildeten Motorgehäuse 35. Davor ist ein Gehäuse dargestellt, das aus einem schmalen Metallring 31 besteht, an dessen beiden Ringkanten je eine metallische Halbplatte befestigt, vorzugsweise angeklebt ist. Eine dieser Halbplatten, mit 30 bezeichnet, ist mit dem Motorflansch 35 verbunden, vorzugsweise verklebt. Beide sich gegenüberliegende Halbplatten weisen sich gegenüberliegende nicht zentrische Licht-Durchlaßöffnungen 36, 28 für das Transmissionsfenster 25 der Umlaufblende 24 (siehe Fig. 3) auf, weiterhin je eine zentrische öffnung 40, 42 für einen Motoradapter 34 (siehe Fig. 3).

Figur 3 zeigt die Umlaufblende 24 in Form einer schmalen Glasplatte mit nichtzentrischem, infrarothemmend beschichtetem Licht-Transmissionsfenster 25 und zentrischer Öffnung 44, an der der Motoradapter 34 angeflanscht oder eingeklebt werden kann, während sein motorseitiger Abschnitt 46 mit der Antriebswelle 26 des Motors 28 verbunden werden kann, beispielsweise über sie geschoben werden kann.

Die Umlaufblende rotiert gegenüber üblichen Umlaufblenden mit dreifacher Umlaufgeschwindigkeit. Das stehende, projizierte Bild wird während seiner Projektion dreimal unterbrochen, so daß sich eine tatsächliche Bildfrequenz von zweiundsiebzig Bildern pro Sekunde ergibt, verglichen mit der üblichen Projektionsfrequenz von vierundzwanzig Bildern pro Sekunde. Die höhere Frequenz erzeugt eine erheblich stärkere Luftströmung an der rotierenden, an einem Abschnitt lichttransparenten, scheibenförmigen Umlaufblende 24, in der Regel Glas. Zwischen der rotierenden Umlaufblende 24 und den beiden gegenüberliegenden metallischen Halbplatten 30, 32 besteht jeweils ein schmaler Luftschlitz von ca. 1-3 mm, in welchen die Luft beim Rotieren mitgerissen wird. Es entsteht praktisch ein Ventilator; dies führt zu einer deutlichen Temperaturreduzierung von über 100° Celsius. Dadurch wird der Einsatz bestimmter lichttransparenter Materialien mit niedriger Temperaturbeständigkeit ermöglicht, weiterhin eine höhere Lebensdauer und eine stärkere Schonung des Filmes.

### Zusammenfassung der Vorteile:

Reduzierung des Massenträgheitsmomentes und dadurch geringere Anforderungen an den Antriebsmotor. Glas hat ein ähnliches spezifisches Gewicht wie Aluminium, aber eine wesentlich höhere Temperaturbeständigkeit.

Durch die hohe Rotationsgeschwindigkeit können sich nicht so leicht Staubpartikel auf der Glasoberfläche ablagern. Da die Hitzebelastung wesentlich geringer ist, ist ein Einbrennen der Schmutzpartikel nicht möglich. Dies ist bei einem stehenden Wärmeschutzfilter der Fall und führt auf Dauer zu einer sich steigernden Lichtschwächung.

Durch den rotationssymmetrischen Aufbau der Glasscheibe werden Unwuchten auf ein Minimum reduziert, so daß auch bei hohen Umdrehungsgeschwindigkeiten eine Auswuchtung der dynamischen Masse nicht notwendig ist.

Durch die Beschichtung der Blende im durchsichtigen Transmissionsfenster mit einer im Infraroten wirksamen Wärmereflexionsschicht kann auf einen sonst üblichen Wärmereflexionsfilter verzichtet werden. Der Lichtwirkungsgrad wird dadurch insgesamt nicht verschlechtert, daß sich im Durchlaßbereich (Hellphase) statt Luft Glas befindet.

Durch das Gehäuse um einen Teil der Umlaufblende, die hohe Winkelgeschwindigkeit und die Adhäsionskraft zwischen Glas und Luft, wirkt die Blende im Bildfensterbereich wie ein Lüfter. Temperatursenkungen am Bildfenster um etwa 100° C wurden, bedingt durch die beschriebene Wirkung, gemessen.

Die hohe Winkelgeschwindigkeit reduziert die Zeit, die benötigt wird, um den Lichtkegel vor einem Transportschritt abzudecken und danach wieder zu öffnen. Der Lichtwirkungsgrad wird dadurch erhöht.

Die Anwendung einer Einflügelblende, die mit 3-facher Geschwindigkeit umläuft und daher lichttechnisch als 3-Flügelblende wirkt, macht erstmals eine 3-Flügelblende mit höherem Lichtwirkungsgrad ohne Verschlußziehen möglich.

## Patentansprüche

1. Kinofilmprojektor, mit einer Lichtquelle (12, 14), einem Bildfenster (16) entsprechend dem Bildformat des Filmes (20), einer Transporteinrichtung zum schrittweisen Filmtransport Bild für Bild hinter dem Bildfenster (16), einem Projektionsobjektiv (18), einer Umlaufblende (24), die im wesentlichen nur bei stehendem Bild Licht durchläßt, und einem Infrarotfilter,
dadurch gekennzeichnet,
a) daß eine rotationssymmetrische Umlaufblende (24) aus wärmebeständigem, lichttransparentem Material wie Glas eingesetzt wird,
b) daß auf der Umlaufblende (24) durch entsprechende Beschichtung oder Abdeckung lediglich ein einziges lichttransparentes Transmissionsfenster (25) im optischen Strahlengang (15) vorgesehen ist,
c) daß eine derart erhöhte vervielfachte Drehgeschwindigkeit der Umlaufblende (24) vorgesehen ist, daß das einzige Transmissionsfenster (25) bei unveränderter üblicher Filmtransport-Geschwindigkeit bei jedem stehenden Bild mit dem Bildfenster (16) in Übereinstimmung gelangt.

2. Kinofilmprojektor nach Anspruch 1, dadurch gekennzeichnet, daß die Umlaufblende (16) dadurch gleichzeitig als Infrarotfilter eingesetzt wird, daß das Transmissionsfenster (25) entsprechend beschichtet wird.

3. Kinofilmprojektor nach Anspruch 1 oder 2, dadurch gekennzeichnet,
daß die Umlaufblende (24) in einem schmalen ortsfesten Gehäuse (31, 30, 32) angeordnet ist, in welchem gegenüberliegende Licht-Durchlaßöffnungen (36, 38) für das Transmissionsfenster (25) der Umlaufblende (24) angeordnet sind.

4. Kinofilmprojektor nach Anspruch 3, dadurch gekennzeichnet, daß das Gehäuse (31, 30, 32) zentrische Aussparungen (40, 42) für einen Motoradapter (34) aufweist, zur Kopplung von Antriebswelle (26) des Motors (28) und Umlaufblende (24).

5. Kinofilmprojektor nach Anspruch 3 oder 4, dadurch gekennzeichnet, daß das Gehäuse für die Umlaufblende (24) aus einem schmalen Metallring (31) mit einem Innendurchmesser etwas größer dem Außendurchmesser der Umlaufblende besteht, an den zwei lichtundurchlässige Scheiben befestigt, vorzugsweise außen angeklebt sind, vorzugsweise in Form von gegenüberliegenden metallischen Halbscheiben (30, 32), von denen eine (30) mit dem Motorgehäuse (35) fest verbunden, vorzugsweise verklebt ist.
